# EUROPÄISCHE PATENTSCHRIFT

(11) **EP 2 652 294 B1**
(45) Veröffentlichungstag und Bekanntmachung des Hinweises auf die Patenterteilung: **19.11.2014**
(21) Anmeldenummer: 11791457.2
(22) Anmeldetag: 07.12.2011
(51) Int. Cl.: F02D 19/10, F02D 19/06, F02M 63/02, F02M 39/02, F02D 41/38

(54) **MIT FLÜSSIGEM UND/ODER GASFÖRMIGEN KRAFTSTOFF ZU BETREIBENDE BRENNKRAFTMASCHINE**
INTERNAL COMBUSTION ENGINE FOR OPERATION WITH LIQUID AND/OR GASEOUS FUEL
MOTEUR À COMBUSTION INTERNE DESTINÉ À FONCTIONNER À L'AIDE D'UN CARBURANT LIQUIDE ET/OU GAZEUX

(30) Priorität: 13.12.2010 DE 102010061183
(43) Veröffentlichungstag der Anmeldung: 23.10.2013
(73) Patentinhaber: L'Orange GmbH, 70435 Stuttgart (DE)
(72) Erfinder: SCHNEIDER, Hartmut, 72657 Altenriet (DE); SLOCINSKI, Holmer, 74906 Bad Rappenau (DE)
(74) Vertreter: Winter, Josef
(86) Internationale Anmeldenummer: PCT/EP2011/006117
(87) Internationale Veröffentlichungsnummer: WO 2012/079718

(56) Entgegenhaltungen:
- EP-A1- 0 964 139
- EP-A2- 1 275 840
- DE-A1- 3 824 467
- DE-C1- 19 621 297
- US-A- 5 297 520
- US-A- 5 890 459

## Beschreibung

Die Erfindung betrifft eine mit flüssigem und/oder gasförmigem Kraftstoff zu betreibende Brennkraftmaschine gemäß dem Oberbegriff des Anspruches 1.

Solche mit Dual Fuel-Einspritzsystemen zu betreibende Brennkraftmaschinen sind in verschiedenen Ausgestaltungen bekannt, so auch mit jeweils zwei auf jeden der Zylinder einspritzenden Injektoren, von denen einer für die Piloteinspritzung im Gasbetrieb vorgesehen und auf diese in der Einspritzmenge ausgelegt ist, wobei die Piloteinspritzung zum Zünden des im Gasbetrieb vorliegenden Gas-Luft-Gemisches dient. Neben diesem auf die Einspritzung kleinerer Kraftstoffmengen ausgelegten Injektor ist für den Betrieb mit Flüssigkraftstoff, insbesondere Diesel, der andere, auf große Kraftstoffmengen ausgelegte Einspritzinjektor vorgesehen.

Um den dadurch bedingten, für die Kraftstoffeinspritzung in den Betriebsarten "Gasbetrieb mit Piloteinspritzung" und "Flüssigkraftstoffbetrieb" gegebenen Verhältnissen Rechnung zu tragen, ist es bekannt, die für die Piloteinspritzung im Gasbetrieb vorgesehenen Injektoren über einen Akkumulator zu versorgen und so einen Common Rail-Betrieb für diese Injektoren vorzusehen, während die für den Flüssigkraftstoffbetrieb vorgesehenen Injektoren als Pumpe-Düse-Element ausgebildet sind.

Bekannt ist es auch, Injektoren zu verwenden, die eine getrennte Einspritzung des Flüssigkraftstoffs für die Piloteinspritzung im Gasbetrieb und für den Flüssigkraftstoffbetrieb in einem Gehäuse ermöglichen. Insbesondere letztgenannte Lösungen führen zu sehr komplexen Injektoren.

Eine Brennkraftmaschine gemäß dem Oberbegriff des Anspruchs 1 ist z.B. aus EP 0 964 139 A bekannt.

Der Erfindung liegt die Aufgabe zugrunde, den für die verschiedenen Betriebsarten unterschiedlichen Anforderungen an die Versorgung mit Flüssigkraftstoff mit möglichst geringem Aufwand betriebssicher gerecht zu werden.

Erreicht wird dies mit den Merkmalen des Anspruches 1, der durch den Anschluss aller Injektoren an einen gemeinsamen Akkumulator, insbesondere ein sogenanntes Common Rail, die Möglichkeit eröffnet, allein oder zumindest vorrangig über die Berücksichtigung des Druckniveaus im Common Rail die Voraussetzungen für eine bedarfsgerechte und zuverlässige Einspritzung sowohl für die Piloteinspritzung im Gasbetrieb wie auch für den Flüssigkraftstoffbetrieb zu gewährleisten. Insbesondere ergänzend hierzu erweist sich die Berücksichtigung eines vorgegebenen unteren Grenzwertes für ein pumpenseitiges Mindestfördervolumen als zweckmäßig.

In einfacher Weise lässt sich dies für die Betriebsarten durch ein entsprechendes Management der für die Versorgung des Akkumulators vorgesehene Hochdruckpumpen erreichen, die entsprechend dem jeweiligen Bedarf zu-, abgeschaltet oder kombiniert eingesetzt werden.

In diesem Rahmen sind verschiedenste Systemvarianten erfindungsgemäß darstellbar, so beispielsweise der Einsatz einer in ihrer Förderleistung kleineren Pumpe für die Kraftstoffversorgung des Common Rails bei Piloteinspritzung im Gasbetrieb, wobei diese Pumpe mechanisch mit der Brennkraftmaschine gekoppelt oder auch elektrisch angetrieben sein kann und wobei zumindest eine weitere, in der Förderleistung auf den Bedarf im Flüssigkraftstoffbetrieb abgestimmte Pumpe als "große" Pumpe vorgesehen ist, die insbesondere über eine Kupplung abtrennbar mit der Brennkraftmaschine antriebsverbunden ist.

Bei einem solchen System kann insbesondere die in der Förderleistung kleinere Pumpe unterstützend zur in der Förderleistung auf den Flüssigkraftstoffbetrieb abgestimmten größeren Pumpe eingesetzt werden, so dass diese letztlich auf eine Förderleistung ausgelegt werden kann, die unterhalb der erforderlichen Maximalleistung liegt. Weiter kann die "große" Pumpe gegebenenfalls auch abgeschaltet werden, so dass für den Gasbetrieb mit Piloteinspritzung die Common Rail-Versorgung allein über die kleinere Pumpe erfolgt.

Insbesondere liegt es auch im Rahmen der Erfindung, ständig beide Pumpen zu betreiben, beispielsweise bei mechanischem oder bevorzugt auch elektrischem Antrieb der kleinen Pumpe und bei einer Kurzschlussschaltung für die große, in der Förderleistung auf den Flüssigkraftstoffbetrieb abgestimmte Pumpe, so dass diese weitgehend druckfrei arbeitet, wobei dann ihre Fördermenge beispielsweise auf den Vorratsbehälter abgeführt wird.

Insbesondere liegt es auch im Rahmen der Erfindung, lediglich eine, gegebenenfalls in ihrer Summe auch mehrere auf die erforderliche Förderleistung für den Flüssigkraftstoffbetrieb abgestimmte Pumpen vorzusehen, die gestuft abschaltbar sind. Insbesondere wenn lediglich eine derartige auf den Gesamtbedarf an Flüssigkraftstoff abgestimmte Pumpe zur Versorgung des Akkumulators, insbesondere Common Rails, vorgesehen ist, liegt es auch im Rahmen der Erfindung, diese Pumpe, insbesondere durch eine Kurzschlussschaltung, auf eine Mindestfördermenge zu begrenzen, die den Flüssigkraftstoffbedarf bei Gasbetrieb mit Piloteinspritzung entspricht, der einem kleinen Bruchteil der Kraftstoffmenge dem Flüssigkraftstoffbetrieb entspricht, wobei über dies bei Piloteinspritzung im Gasbetrieb mit weit niedrigeren Drücken gearbeitet wird als bei einem Flüssigkraftbetrieb. Für Letzteren sind Drücke in Höhe bis etwa 2.000 bar vorgesehen, während bei Piloteinspritzung im Gasbetrieb mit Drücken etwa um 1.000 bar gearbeitet werden kann, da durch den Gasbetrieb nachfolgend an die Einspritzung eine Verbrennung des eingespritzten Flüssigkraftstoffes mit dem Gas-Luft-Gemisch erfolgt.

Die erfindungsgemäße betriebsabhängig im Druckniveau variable Einstellung des Akkumulators, aus dem die Einspritzinjektoren für den Gasbetrieb mit Piloteinspritzung und für den Flüssigkraftstoff gespeist werden, bietet gute Voraussetzungen dafür, die vorgesehenen Hochdruckpumpen jeweils mit einer Mindestfördermenge zu betreiben, die für die innere Schmierung der Pumpenelemente erforderlich ist. Die Mindestfördermenge liegt bei etwa 2 % der maximalen Pumpenfördermenge. Da die Pumpen im Betrieb auf dem Motor meist im Bereich zwischen etwa 50 und 80 % ihrer möglichen Fördermenge betrieben werden, sind etwa 3 bis 5 % der Volllast-Einspritzmenge durch die Pumpen zu fördern, um ein Versagen zu verhindern. Da die für den Leerlauf notwendige Einspritzmenge bei etwa 10 % der Volllast-Einspritzmenge liegt, ist dies im Flüssigkraftstoffbetrieb kein Problem.

Die für die Piloteinspritzung im Gasbetrieb erforderliche, über die Pilotinjektoren einzuspritzende Kraftstoffmenge liegt aber deutlich niederer, so dass erfindungsgemäß Maßnahmen getroffen werden müssen, um eine betriebssichere Arbeitsweise der Pumpen gewährleisten zu können. Grundsätzlich ist dies erfindungsgemäß dadurch erreicht, dass ungeachtet dessen, wie die Pumpen betrieben werden, für den Akkumulator ein variables Druckniveau aufrechterhalten werden kann. In wirtschaftlicher Weise ist dies dadurch möglich, dass die auf den Akkumulator eingespeiste Fördermenge in Abhängigkeit vom Druckniveau im Akkumulator betriebsabhängig variabel ist. Dem kann durch entsprechende Einflussnahme auf die Pumpen oder den Akkumulator Rechnung getragen werden, sei es durch Veränderung der Förderleistung der Pumpen bis hin zum Abschalten von Pumpen und/oder durch entsprechende Kurzschlussschaltungen im Pumpenkreislauf oder nachfolgend für den Akkumulator.

Weitere Einzelzeiten und Merkmale der Erfindung ergeben sich aus den Ansprüchen, der Beschreibung und den Zeichnungen. Es zeigen:

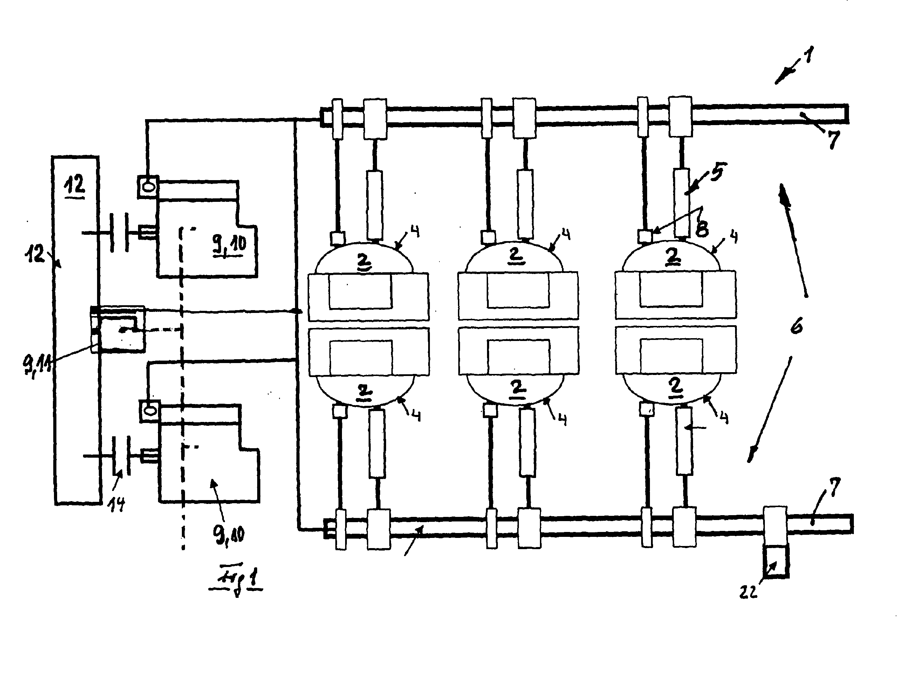

- Fig. 1 bis 3: Systemvarianten für den Betrieb einer mit Flüssigkraftstoff und mit gasförmigem Kraftstoff zu betreibenden Brennkraftmaschine.

Die Darstellungen in den Fig. 1 bis 3 gehen jeweils von einer Brennkraftmaschine, insbesondere einer Groß-Brennkraftmaschine wie etwa einem Schiffsmotor oder dergleichen aus. Die insgesamt mit 1 bezeichnete Brennkraftmaschine weist im Ausführungsbeispiel sechs Zylinder 2 auf und ist als sogenannte Dual Fuel Maschine zu betreiben. Dies bedeutet, dass auf die jeweiligen hier nicht dargestellten Brennräume der Zylinder Kraftstoff, je nach Betriebsart in gasförmiger und/oder flüssiger Form eingebracht wird, wobei der gasförmige Kraftstoff in den Brennräumen als Gas-Luft-Gemisch vorliegt und in den Figuren die Einbringung dieses Gas-Luft-Gemisches auf die Brennräume jeweils nur durch einen Pfeil 4 symbolisiert ist und ergänzend zur Einbringung als Gas-Luft-Gemisch zur Zündung eine Piloteinspritzung erfolgt.

Die Einbringung des Flüssigkraftstoffes für den Flüssigkraftstoffbetrieb, in dem beispielsweise mit Schweröl gearbeitet wird, erfolgt über Injektoren 5, wobei die Injektoren 5 an einen Akkumulator 6 angeschlossen sind, der im Ausführungsbeispiel durch zwei jeweils längs einer Reihe der Zylinder 2 angeordnete Common Rails 7 gebildet ist.

An diese sind auch jeweils Injektoren 8 angeschlossen, über die die Piloteinspritzung im Gasbetrieb erfolgt. Für diese Piloteinspritzung als Zündhilfe sind wesentlich geringere Kraftstoffmengen auf den jeweiligen Zylinder 2 einzuspritzen als im Flüssigkraftstoffbetrieb mit Einspritzung über die Injektoren 5. Entsprechend können auch die Injektoren 8, wie symbolisch dargestellt, wesentlich kleiner als die Injektoren 5 ausgebildet sein.

Da über die Injektoren 5 und 8 in der jeweiligen Betriebsart sehr unterschiedliche Kraftstoffmengen auf den jeweiligen Brennraum einzuspritzen sind und in den verschiedenen Betriebsarten aufgrund der unterschiedlichen Kraftstoff-LuftGemische auch unterschiedliche Bedingungen für die Aufbereitung des eingespritzten Flüssigkraftstoffes herrschen, kann für die Einspritzung mit unterschiedlichen Spritzdrücken gearbeitet werden, und zwar für den Flüssigkraftstoffbetrieb mit höheren Spritzdrücken als für die Piloteinspritzung. Der Spritzdruck für die Piloteinspritzung liegt etwa bei der Hälfte des Spritzdruckes für den Flüssigkraftstoffbetrieb, in dem mit Spritzdrücken bis in die Größenordnung von 2.000 bar gearbeitet wird.

Im Hinblick auf die unterschiedlichen Spritzdrücke und die in weit größerem Maße unterschiedlichen Einspritzmengen erfolgt die Kraftstoffzufuhr auf den Akkumulator 6 erfindungsgemäß derart, dass bei einem für die Piloteinspritzung im Gasbetrieb geforderten, kleineren Druckniveau als für den Betrieb mit Flüssigkraftstoff in allen Betriebsarten die auf den Akkumulator 6 eingespeiste Kraftstoffmenge oberhalb eines unteren Grenzwertes liegt, der, insbesondere im Hinblick auf die innere Schmierung der Pumpe, zu gewährleisten ist.

Dies wird gemäß Fig. 1 dadurch erreicht, dass mehrere Pumpen 9 vorgesehen sind, von denen zumindest eine in ihrer Pumpleistung auf die für den Flüssigkraftstoffbetrieb erforderliche Fördermenge, als "größere" Pumpe 10, abgestimmt ist und dass eine weitere, in ihrer Pumpleistung kleinere Pumpe 11 zumindest auf eine Förderleistung ausgelegt ist, die eine vorgegebene Mindestfördermenge liefert. Die vorgegebene Mindestfördermenge entspricht dabei einer Fördermenge, die zur inneren Schmierung der Pumpenelemente notwendig ist und bei etwa 2 % der Volllastfördermenge der Pumpe liegt.

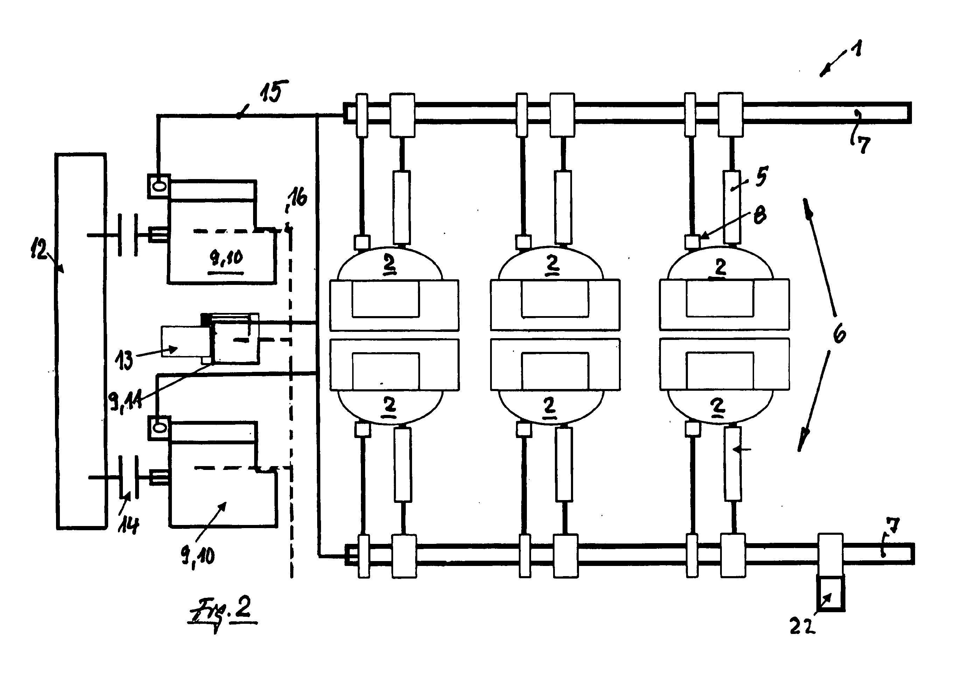

Im Ausführungsbeispiel gemäß Fig. 1 wird dies in Verbindung mit einem kleineren Pumpe 11 erreicht, die gegebenenfalls durch mechanische Kopplung, zum Getriebe 12 permanent angetrieben ist, die aber auch elektrisch über einen Elektromotor 13 angetrieben sein kann, wie in Fig. 2 veranschaulicht.

In beiden Fällen ist die jeweils größere Pumpe 10 mechanisch mit der Brennkraftmaschine 1 antriebsverbunden, in den Fig. 1 und 2 veranschaulicht durch eine Antriebsverbindung zum Getriebe 12 bei in der Antriebsverbindung liegender Kupplung 14, über die die größere Pumpe 10 oder die größeren Pumpen 10 abgeschaltet werden können.

Beide Lösungen gemäß Fig. 1 und 2 zeigen somit Möglichkeiten, die Förderleistung durch Zu- und Abschalten der größeren Pumpen 10 bei angetriebener kleinerer Pumpe 11 zu variieren. Es ist somit insgesamt gesehen bezogen auf das Ausführungsbeispiel gemäß Fig. 1 und 2 möglich, eine durch den Betrieb von einer oder zwei größeren Pumpen 10 bei zugeschalteter kleinerer Pumpe 11 abgestufter Förderleistung bereitzustellen, gegebenenfalls aber auch beide größeren Pumpen 10 abzuschalten und lediglich über die Pumpe 11 eine als unteren Grenzwert vorgegebene Fördermenge bereitzustellen. Insbesondere bei elektrischem Antrieb der kleineren Pumpe 11 sind diesbezüglich nochmals erweiterte Möglichkeiten gegeben.

Die hochdruckseitigen Verbindungsleitungen 15 der Pumpen 10, 11 münden auf den Akkumulator 6 aus und sind in Volllinien dargestellt. Die Anschlussleitungen 16 zur Niederdruckseite sind strichpunktiert veranschaulicht.

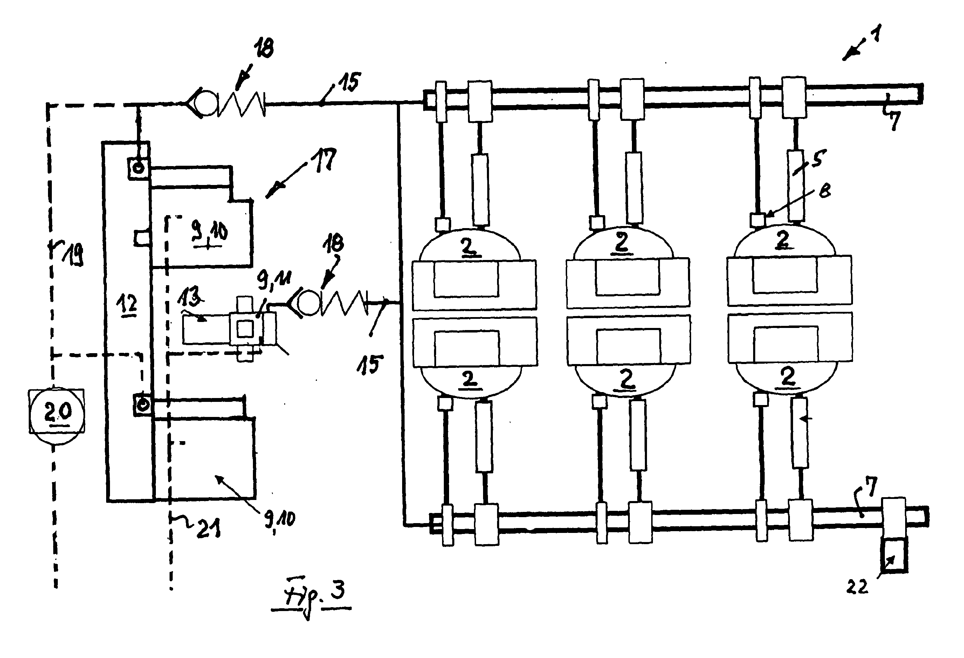

Auch Fig. 3 veranschaulicht ein Pumpensystem 17 für die Versorgung der Brennkraftmaschine 1 im Flüssigkraftstoffbetrieb und für die Piloteinspritzung im Gasbetrieb. Wiederum sind zwei größere Pumpen 10 vorgesehen, in diesem Fall aber bei permanenter Antriebsverbindung der Pumpen 10 zur Brennkraftmaschine 1 bzw. dem Getriebe 12 der Brennkraftmaschine 12, wie veranschaulicht. Als Pumpe 11 mit kleinerer Leistung ist wiederum eine Pumpe mit Antrieb über einen Elektromotor 13 vorgesehen, wobei als Pumpe 11 eine Radialpumpe veranschaulicht ist. Anstelle eines elektromotorischen Antriebes für die Pumpe 11 kann auch bei dieser Ausführungsform eine mechanische Antriebsverbindung der Pumpe 11 zur Brennkraftmaschine, beispielsweise über das Getriebe 12, gegeben sein, analog zur Darstellung gemäß Fig. 1.

Das Pumpensystem 17 gemäß Fig. 3 sieht wiederum, in Volllinien dargestellt, eine hochdruckseitige Verbindung 15 zum Akkumulator 6 vor, wobei in dieser Verbindung, entgegen der Förderrichtung auf den Akkumulator 6 sperrend, Rückschlagventile 18 vorgesehen sind. Die Anschlussleitungen 21 der Pumpen 10 und 11 zur Niederdruckseite sind strichliert dargestellt und in der Verbindung 19 der Pumpen 10 größerer Leistung zur Niederdruckseite liegt ein Sperrventil 20, bevorzugt ausgebildet als 2/2-Wege-Ventil. Dieses ist für den Pumpbetrieb mit Förderung auf den Akkumulator 6 geschlossen, für den Kurzschlussbetrieb offen.

Die Verbindung der Pumpe 11 kleinerer Leistung zum Akkumulator 6,die ebenfalls mit 15 bezeichnet ist, ist ebenfalls über einen entgegen der Förderrichtung sperrendes Rückschlagventil 18 abgesichert, so dass ein Kurzschluss über die als Radialpumpe ausgebildete Pumpe 11 des Akkumulators 6 zur Niederdruckseite ausgeschlossen ist. Die über die Anschlussleitungen 21 hergestellte Verbindung zur Niederdruckseite dient auch als gemeinsame saugseitige Versorgungsverbindung für die Pumpen 10 und 11.

Für die untereinander leistungsverbundenen, den Akkumulator 6 bildenden Common Rails ist eine gemeinsame Absicherung über ein Druckbegrenzungsventil 22 vorgesehen.

## Patentansprüche

1. Umschaltbar mit Flüssigkraftstoff oder gasförmigem Kraftstoff zu betreibende Brennkraftmaschine (1), insbesondere Groß-Brennkraftmaschine, die im Gasbetrieb mit Piloteinspritzung von Flüssigkraftstoff arbeitet und bei der für die Einspritzung des Flüssigkraftstoffes auf die Zylinder (2) der Brennkraftmaschine (1) im Betrieb mit Flüssigkraftstoff und für die Piloteinspritzung im Gasbetrieb gesonderte Injektoren (5, 8) vorgesehen sind, die zur Versorgung mit Flüssigkraftstoff an einem gemeinsamen Akkumulator (6) angeschlossen sind, der über zumindest eine Pumpe (9) gespeist ist, wobei die auf den Akkumulator (6) eingespeiste Kraftstoffmenge in Abhängigkeit vom Druckniveau variabel ist, derart, dass das Druckniveau für die Piloteinspritzung im Gasbetrieb kleiner ist als für den Betrieb mit Flüssigkraftstoff, insbesondere korrelierend zu einer pumpenseitigen, oberhalb eines Grenzwertes liegenden Mindestfördermenge,
**dadurch gekennzeichnet,**
**dass** zur Kraftstoffversorgung des Akkumulators (6) zumindest zwei getrennte, in ihrer Pumpleistung abgestufte Pumpen (10, 11) vorgesehen sind, von denen die Pumpe (11) kleinerer Leistung zumindest die für die Piloteinspritzung im Gasbetrieb erforderliche Fördermenge liefert.

2. Brennkraftmaschine nach Anspruch 1,
**dadurch gekennzeichnet,**
**dass** zur Einspritzung des Flüssigkraftstoffs im Flüssigkraftstoffbetrieb und im Gasbetrieb mit Piloteinspritzung auf die Zylinder (2) jeweils unabhängig voneinander zu betreibende Injektoren (5, 8) vorgesehen sind und die Injektoren (5, 8) im Betrieb mit Flüssigkraftstoff auf die Einspritzung einer jeweiligen Kraftstoffmenge ausgelegt sind, die ein Vielfaches der für die Piloteinspritzung vorgesehenen Kraftstoffmenge ausmacht.

3. Brennkraftmaschine nach Anspruch 2, **dadurch gekennzeichnet, dass** die Injektoren (5, 8) zu einer Baueinheit zusammengefasst sind, insbesondere in Verbindung mit einem Zusatzkraftstoffspeicher.

4. Brennkraftmaschine nach einem der vorhergehenden Ansprüche,
**dadurch gekennzeichnet,**
**dass** von den Pumpen (10, 11) zumindest eine oder mehrere Pumpen (10) als große Pumpe(n) in ihrer Pumpleistung auf die für den Flüssigkraftstoffbetrieb erforderliche Fördermenge abgestimmt ist oder sind, und dass zumindest eine der Pumpen (10, 11), insbesondere die auf die Fördermenge für den Flüssigkraftstoffbetrieb abgestimmte Pumpe oder Pumpen (10) abschaltbar ist/sind.

5. Brennkraftmaschine nach einem der vorhergehenden Ansprüche,
**dadurch gekennzeichnet,**
**dass** von den Pumpen (10, 11) zumindest eine, insbesondere die in der Förderleistung auf die für den Flüssigkraftstoffbetrieb abgestimmte Pumpe oder Pumpen (10) bevorzugt über eine Kupplung (14) abtrennbar mit der Brennkraftmaschine (1) verbunden ist.

6. Brennkraftmaschine nach einem der vorhergehenden Ansprüche,
**dadurch gekennzeichnet,**
**dass** von den Pumpen (10, 11) insbesondere die in der Pumpleistung kleinere Pumpe (11) mit der Brennkraftmaschine 81) antriebsverbunden und/oder über einen Elektromotor (13) antreibbar ist.

7. Brennkraftmaschine nach einem der Ansprüche 1 bis 4 oder 6,
**dadurch gekennzeichnet,**
**dass** für zumindest eine der Pumpen (10, 11), insbesondere die in der Pumpleistung größere Pumpe oder Pumpen (10), für die Kraftstoffversorgung des Akkumulators (6) permanent mit der Brennkraftmaschine (1) antriebsverbunden ist, bei wahlweiser Zuschaltbarkeit der in der Pumpleistung kleineren und direkt über die Brennkraftmaschine oder elektrisch angetriebenen Pumpe (11).

8. Brennkraftmaschine nach einem der vorhergehenden Ansprüche,
**dadurch gekennzeichnet,**
**dass** zumindest eine der Pumpen (10, 11), insbesondere die in der Pumpleistung größere Pumpe oder Pumpen (10), im Kurzschlussbetrieb zu betreiben ist/sind.

9. Brennkraftmaschine nach einem der vorhergehenden Ansprüche,
**dadurch gekennzeichnet,**
**dass** der Akkumulator (6) über eine, insbesondere lediglich eine der Förderleistung einstellbare Pumpe (10) versorgt wird.

## Claims

1. An internal combustion engine (1), in particular large-scale internal combustion engine, which can be operated in a switchable fashion with liquid fuel or gaseous fuel and which operates in the gas mode with pilot injection of liquid fuel, and in which separate injectors (5, 8) for the injection of the liquid fuel onto the cylinders (2) of the internal combustion engine (1) in the operating mode with liquid fuel and for the pilot injection in the gaseous operating mode are provided, said injectors (5, 8) being connected, in order to be supplied with liquid fuel, to a common accumulator (6) which is fed via at least one pump (9), wherein the quantity of fuel which is fed in to the accumulator (6) is variable as a function of the pressure level, such that the pressure level for the pilot injection in the gas operating mode is lower than for the operating mode with liquid fuel, in particular in order to correlate for a pump-side minimum delivery quantity which is above a limiting value,
**characterized**
**in that** in order to supply fuel to the accumulator (6) at least two separate pumps (10, 11) which are graduated in their pumping power are provided, the pump (11) of which with a relatively low power supplies at least the delivery quantity necessary for the pilot injection in the gas operating mode.

2. Internal combustion engine according to Claim 1,
**characterized**
**in that** injectors (5, 8) which can be operated independently of one another are respectively provided for injection of the liquid fuel in the liquid fuel operating mode and in the gas operating mode with pilot injection onto the cylinders (2), and in the liquid fuel operating mode the injectors (5, 8) are configured to inject a respective quantity of fuel which constitutes a multiple of the quantity of fuel provided for the pilot injection.

3. Internal combustion engine according to Claim 2,
**characterized**
**in that** the injectors (5, 8) are combined to form one structural unit, in particular in conjunction with an additional fuel accumulator.

4. Internal combustion engine according to one of the preceding claims,
**characterized**
**in that** of the pumps (10, 11), at least one or more pumps (10) is/are adjusted as large pumps in terms of their pumping power to the delivery quantity which is necessary for the liquid fuel operating mode, and in that at least one of the pumps (10, 11), in particular the pump or pumps (10) adjusted to the delivery quantity for the liquid fuel operating mode, can be switched off.

5. Internal combustion engine according to one of the preceding claims,
**characterized**
**in that** of the pumps (10, 11), at least one, in particular the pump or pumps (10) adjusted in terms of the delivery power to the delivery quantity which is necessary for the liquid fuel operating mode is preferably connected to the internal combustion engine (1) in such a way that it can be disconnected by means of a coupling (14).

6. Internal combustion engine according to one of the preceding claims,
**characterized**
**in that** of the pumps (10, 11) in particular the pump (11) which is relatively low in pumping power has a drive connection to the internal combustion engine (1) and/or can be driven via an electric motor (13).

7. Internal combustion engine according to one of Claims 1 to 4 or 6,
**characterized**
**in that** at least one of the pumps (10, 11), in particular the pump or pumps (10) which is/are relatively large in pumping power, has a permanent drive connection to the internal combustion engine (1) for supplying fuel to the accumulator (6), accompanied by optional connection of the pump (11) which is relatively low in pumping power and is driven directly by means of the internal combustion engine or electrically.

8. Internal combustion engine according to one of the preceding claims,
**characterized**
**in that** at least one of the pumps (10, 11), in particular the pump or pumps (10) which is/are relatively large in pumping power, can be operated in the short-circuit operating mode.

9. Internal combustion engine according to one of the preceding claims,
**characterized**
**in that** the accumulator (6) is supplied via one, in particular only one, pump (10) which can be adjusted in terms of the delivery power.

## Revendications

1. Moteur à combustion interne (1) commutable, pouvant fonctionner de manière commutable avec du carburant liquide ou du carburant gazeux, en particulier gros moteur à combustion interne, qui fonctionne en mode de propulsion à gaz avec une injection pilote de carburant liquide et dans lequel on prévoit, pour l'injection du carburant liquide sur les cylindres (2) du moteur à combustion interne (1), des injecteurs séparés (5, 8) pour le fonctionnement avec du carburant liquide et pour l'injection pilote en mode de propulsion à gaz, lesquels sont raccordés à un accumulateur commun (6) pour l'alimentation en carburant liquide, lequel est alimenté par le biais d'au moins une pompe (9), la quantité de carburant injectée sur l'accumulateur (6) étant variable en fonction du niveau de pression, de telle sorte que le niveau de pression pour l'injection pilote en mode de propulsion à gaz soit inférieur au niveau de pression pour le fonctionnement avec du carburant liquide, en particulier en fonction d'une quantité de refoulement minimale de la pompe située au-dessus d'une valeur limite,
**caractérisé en ce que**
pour l'alimentation en carburant de l'accumulateur (6), on prévoit au moins deux pompes séparées (10, 11) dont la puissance de pompe est étagée, la pompe (11) ayant la plus faible puissance fournissant au moins la quantité de refoulement nécessaire pour l'injection pilote en mode de propulsion à gaz.

2. Moteur à combustion interne selon la revendication 1,
**caractérisé en ce que**
l'on prévoit, pour l'injection du carburant liquide en mode de fonctionnement à carburant liquide et en mode de propulsion à gaz avec injection pilote sur les cylindres (2), à chaque fois des injecteurs (5, 8) pouvant fonctionner indépendamment les uns des autres, et les injecteurs (5, 8), pour le fonctionnement avec du carburant liquide, sont prévus pour l'injection d'une quantité de carburant respective qui représente un multiple de la quantité de carburant prévue pour l'injection pilote.

3. Moteur à combustion interne selon la revendication 2,
**caractérisé en ce que**
les injecteurs (5, 8) sont réunis en une unité structurelle, en particulier en liaison avec un accumulateur de carburant supplémentaire.

4. Moteur à combustion interne selon l'une quelconque des revendications précédentes,
**caractérisé en ce**
**qu'**au moins une ou plusieurs pompes (10) parmi les pompes (10, 11), en tant que grosse(s) pompe(s), est ou sont adaptées en termes de puissance de pompe à la quantité de refoulement nécessaire pour le mode de fonctionnement à carburant liquide, et en ce qu'au moins l'une des pompes (10, 11), en particulier la pompe ou les pompes (10) adaptée(s) à la quantité de refoulement pour le mode de fonctionnement à carburant liquide, peut ou peuvent être coupée(s).

5. Moteur à combustion interne selon l'une quelconque des revendications précédentes,
**caractérisé en ce**
**qu'**au moins une parmi les pompes (10, 11), en particulier la ou les pompe(s) adaptée(s) en termes de puissance de pompe à la quantité de refoulement nécessaire pour le mode de fonctionnement à carburant liquide, est de préférence connectée par le biais d'un accouplement (14) de manière séparable au moteur à combustion interne (1).

6. Moteur à combustion interne selon l'une quelconque des revendications précédentes,
**caractérisé en ce que**
parmi les pompes (10, 11), en particulier la plus petite pompe (11) en termes de puissance de pompe est connectée par entraînement au moteur à combustion interne (1) et/ou peut être entraînée par le biais d'un moteur électrique (13).

7. Moteur à combustion interne selon l'une quelconque des revendications 1 à 4 ou 6,
**caractérisé en ce**
**qu'**au moins l'une des pompes (10, 11), en particulier la plus grosse pompe ou les plus grosses pompes (10) en termes de puissance de pompe est ou sont connectée(s) par entraînement de manière permanente au moteur à combustion interne (1) pour l'alimentation en carburant de l'accumulateur (6), avec possibilité de branchement sélectif de la plus petite pompe (11) en termes de puissance de pompe entraînée directement par le biais du moteur à combustion interne ou de manière électrique.

8. Moteur à combustion interne selon l'une quelconque des revendications précédentes,
**caractérisé en ce**
**qu'**au moins l'une des pompes (10, 11), en particulier la plus grosse pompe ou les plus grosses pompes (10) en termes de puissance de pompe, peut/peuvent être entraînée(s) en mode de court-circuit.

9. Moteur à combustion interne selon l'une quelconque des revendications précédentes,
**caractérisé en ce que**
l'accumulateur (6) est alimenté par le biais d'une, et en particulier seulement une, pompe (10), à puissance de refoulement ajustable.
